# EUROPÄISCHE PATENTANMELDUNG

(11) **EP 3 661 113 A1**
(43) Veröffentlichungstag der Anmeldung: **03.06.2020**
(21) Anmeldenummer: 18209579.4
(22) Anmeldetag: 30.11.2018
(51) Int. Cl.: H04L 9/00, H04L 9/08, H04L 9/32

(54) **VERFAHREN UND VORRICHTUNG ZUM ÜBERTRAGEN VON DATEN IN EINEM PUBLISH-SUBSCRIBE-SYSTEM**

(71) Anmelder: Siemens Aktiengesellschaft, 80333 München (DE)
(72) Erfinder: Fischer, Kai, 85598 Baldham (DE); Fries, Steffen, 85598 Baldham (DE)

(57) **Zusammenfassung**

Es wird ein Verfahren zum Übertragen von Daten in einem Publish-Subscribe-System (100) umfassend einen Schlüsselverteilserver (200) und eine Mehrzahl von mit dem Schlüsselverteilserver (200) koppelbaren Kommunikations-Vorrichtungen (101, 102, 103, 104) umfassend zumindest eine Server-Vorrichtung und eine Anzahl von Client-Vorrichtungen vorgeschlagen. Das Verfahren umfasst die folgenden Schritte:
a) Bereitstellen (S101) eines Gruppenschlüssels durch den Schlüsselverteilserver (200) an eine Gruppe (G) ausgewählt aus den Kommunikations-Vorrichtungen (101, 102, 103, 104) zur Schaffung einer durch den Gruppenschlüssel gesicherten Gruppen-Kommunikation innerhalb der Gruppe (G) der ausgewählten Kommunikations-Vorrichtungen (101, 102, 103, 104),
b) Bereitstellen (S102) einer mittels eines öffentlichen Schlüssels einer asymmetrischen Verschlüsselung verschlüsselbaren Punkt-zu-Punkt-Verbindung zwischen einer ersten und einer zweiten Kommunikations-Vorrichtung (101, 102) der Gruppe (G), und
c) Übertragen (S103) einer mittels des öffentlichen Schlüssels für die Punkt-zu-Punkt-Verbindung verschlüsselten und mittels des Gruppenschlüssels gesicherten Nachricht zwischen der ersten und der zweiten Kommunikations-Vorrichtung (101, 102).

## Beschreibung

Die vorliegende Erfindung betrifft ein Verfahren sowie ein Computerprogrammprodukt zum Übertragen von Daten in einem Publish-Subscribe-System. Des Weiteren betrifft die vorliegende Erfindung eine Vorrichtung zum Übertragen von Daten in einem Publish-Subscribe-System und ein solches Publish-Subscribe-System.

Das technische Gebiet der Erfindung betrifft die Übertragung von Daten in einem Publish-Subscribe-System, insbesondere die Übertragung von Daten in einem Publish-Subscribe-System zwischen einer ersten Kommunikations-Vorrichtung und einer zweiten Kommunikations-Vorrichtung.

Mit der Öffnung von geschlossenen Systemen zu offenen IoT-Systemen (IoT; Internet-of-Things) ergeben sich Anforderungen für die Kommunikation in Industrienetzen, welche aus dem Telekommunikationsumfeld und dem öffentlichen Internet bekannt sind. Durch die zunehmende Dezentralisierung der Systeme befinden sich Komponenten auch hinter Firewall-Systemen und sind damit nicht direkt vom Internet erreichbar.

Hier kommen sogenannte Publish-Subscribe-Systeme zum Einsatz. Publish-Subscribe-Systeme zeichnen sich dadurch aus, dass herkömmlicherweise keine dedizierte bidirektionale Kommunikationsverbindung zwischen zwei Kommunikations-Endvorrichtungen, wie beispielsweise einem Server und einem Client aufgebaut wird, sondern dass die Kommunikation Topic-basiert erfolgt. Bei Publish-Subscribe-Systemen kann sowohl die klassische Punkt-zu-Punkt-Kommunikation als auch eine Gruppen-Kommunikation zum Einsatz kommen, um auf eine möglichst effiziente Art eine Vielzahl von Systemen zu erreichen. Ein Beispiel hierfür ist ein Lastabwurf, eine Anbindung von dezentralen Energieressourcen oder auch die Begrenzung der Stromeinspeisung in einem Smart-Grid-System.

Für die Punkt-zu-Punkt-Kommunikation als auch für die Gruppen-Kommunikation in einem Publish-Subscribe-System besteht diese Anforderung einer Ende-zu-Ende-Sicherheit. Insbesondere umfasst die Anforderung eine Sicherstellung, dass Nachrichten sowohl bei der Gruppen-Kommunikation zwischen mehreren Kommunikations-Vorrichtungen als auch bei der Ende-zu-Ende-Kommunikation zwischen zwei Kommunikations-Vorrichtungen nicht unautorisiert verändert werden dürfen.

Um dieser Anforderung gerecht zu werden, sind aus dem Stand der Technik verschiedene Verfahren bekannt. Der Stand der Technik bei Publish-Subscribe-Systemen umfasst insbesondere einerseits Message Broker-basierte Verfahren und andererseits Broker-Less-basierte Verfahren.

Bei dem Message Broker-basierten Verfahren umfasst eine Gruppen-Kommunikation zumindest einen Message Broker (Übermittlungs-Vorrichtung) und zwei oder mehr Kommunikations-Vorrichtungen. Hierbei wird der Message Broker zwischen zwei oder mehreren Kommunikations-Vorrichtungen innerhalb einer Gruppen-Kommunikation angeordnet. Die Aufgabe des Message Broker ist dabei einerseits die Authentifizierung der einzelnen Kommunikations-Vorrichtungen, andererseits die Verteilung von zum Beispiel digitalen Zertifikaten an anfragende Kommunikations-Vorrichtungen sowie die Übertragung von Daten zu einzelnen Kommunikations-Vorrichtungen. Bei dieser Art der Kommunikation können sich die Kommunikations-Vorrichtungen bei dem Message Broker auf Topics subskribieren und bekommen die entsprechenden Nachrichten zugestellt, wenn eine weitere Kommunikations-Vorrichtung eine Nachricht zu dem subskribierten Topic an den Message Broker veröffentlicht (publishen). Bei dem Message Broker-basierten Verfahren wird die Kommunikationsverbindung zwischen Kommunikations-Vorrichtungen und Message Broker über eine Transportverschlüsselung wie TLS geschützt, welche Integrität und Vertraulichkeit gewährleistet und auch die Authentisierung des Message Brokers ermöglicht. Voraussetzung ist hierbei, dass der Message Broker über asymmetrisches Schlüsselmaterial und ein entsprechendes X.509 Zertifikat zur Authentifikation verfügt. In Message Broker-basierten Verfahren wird angenommen, dass der Message Broker vertrauenswürdig ist, zumindest was die Annahme und die Zustellung von Daten betrifft. Jedoch wird hierbei keine Ende-zu-Ende-Sicherheit zwischen den Kommunikations-Vorrichtungen der Gruppe erreicht, da es einerseits sein kann, dass der Message Broker nicht vertrauenswürdig ist und andererseits der ersten Kommunikations-Vorrichtung die zweite Kommunikations-Vorrichtung, welche ein festgelegter Empfänger einer Nachricht ist, nicht bekannt ist.

Bei dem Broker-Less-basierten Verfahren umfasst eine Gruppen-Kommunikation lediglich die einzelnen Kommunikations-Vorrichtungen und keinen Message Broker. Dabei können Multicast-Adressen verschiedene Topics zugeordnet werden. Die Kommunikations-Vorrichtungen, welche an einem Topic interessiert sind, sind dann Subskribenten einer oder mehrerer Multicast-Adressen. Hierbei kann die Sicherung der Gruppen-Kommunikation durch Gruppenschlüssel erreicht werden, die mittels eines zentralen Schlüsselverteilservers an die einzelnen Kommunikations-Vorrichtungen der Gruppe verteilt werden. Dadurch können die Nachrichten zumindest innerhalb der Gruppe gesichert werden. Jedoch wird dabei ebenfalls keine Ende-zu-Ende-Sicherheit zwischen den Kommunikations-Vorrichtungen der Gruppe erreicht, da alle Kommunikations-Vorrichtungen der Gruppe Nachrichten erstellen, verschlüsseln, modifizieren und entschlüsseln können.

Insbesondere ist in der DE 10 2016 222 523 A1 offenbart, dass in einem Publish-Subscribe-System Topic-spezifische Schlüssel vom verteilten Gruppenschlüssel abgeleitet werden, um damit Untergruppen zu bilden, welche wiederrum eine Untergruppenschlüssel aufweisen, um die Sicherheit der Ende-zu-Ende-Kommunikation zu erhöhen.

Vor diesem Hintergrund besteht eine Aufgabe der vorliegenden Erfindung darin, die Übertragung von Daten in einem Publish-Subscribe-System zu verbessern.

Gemäß einem ersten Aspekt wird ein Verfahren zum Übertragen von Daten in einem Publish-Subscribe-System umfassend einen Schlüsselverteilserver und eine Mehrzahl von mit dem Schlüsselverteilserver koppelbaren Kommunikations-Vorrichtungen umfassend zumindest eine Server-Vorrichtung und eine Anzahl von Client-Vorrichtungen vorgeschlagen. Das Verfahren umfasst die folgenden Schritte:
a) Bereitstellen eines Gruppenschlüssels durch den Schlüsselverteilserver an eine Gruppe ausgewählt aus den Kommunikations-Vorrichtungen zur Schaffung einer durch den Gruppenschlüssel gesicherten Gruppen-Kommunikation innerhalb der Gruppe der ausgewählten Kommunikations-Vorrichtungen,
b) Bereitstellen einer mittels eines öffentlichen Schlüssels einer asymmetrischen Verschlüsselung verschlüsselbaren Punkt-zu-Punkt-Verbindung zwischen einer ersten und einer zweiten Kommunikations-Vorrichtung der Gruppe, und
c) Übertragen einer mittels des öffentlichen Schlüssels für die Punkt-zu-Punkt-Verbindung verschlüsselten und mittels des Gruppenschlüssels gesicherten Nachricht zwischen der ersten und der zweiten Kommunikations-Vorrichtung.

Dabei umfasst der Schritt c), dass die Nachricht mittels des öffentlichen Schlüssels verschlüsselt wird und anschließend die verschlüsselte Nachricht mittels des Gruppenschlüssels gesichert wird. Alternativ kann der Schritt c) auch umfassen, dass die Nachricht mittels des Gruppenschlüssels gesichert wird und anschließend die gesicherte Nachricht mittels des öffentlichen Schlüssels verschlüsselt wird.

Hier und im Folgenden bezieht sich "gesichert" auf die erfolgte Anwendung des Gruppenschlüssels auf die Nachricht. Des Weiteren bezieht sich "verschlüsselt" hier und im Folgenden auf die erfolgte Anwendung des öffentlichen Schlüssels für die Punkt-zu-Punkt-Verbindung.
Vorliegend wird in einer bestehenden Gruppen-Kommunikation, welche über den Gruppenschlüssel gesichert ist, eine asymmetrisch verschlüsselte Punkt-zu-Punkt-Verbindung zwischen der ersten Kommunikations-Vorrichtung und der zweiten Kommunikations-Vorrichtung geschaffen. Hierdurch wird eine Ende-zu-Ende-Verschlüsselung innerhalb der Gruppe zwischen der ersten Kommunikations-Vorrichtung und der zweiten Kommunikations-Vorrichtung gebildet.

Durch die Ende-zu-Ende-Verschlüsselung ist es möglich, eine mittels des Gruppenschlüssels gesicherte Nachricht zwischen der ersten Kommunikations-Vorrichtung und der zweiten Kommunikations-Vorrichtung zu übertragen, ohne dass die gesicherte Nachricht von anderen Kommunikations-Vorrichtungen innerhalb der Gruppe, und auch nicht außerhalb der Gruppe, modifiziert und entschlüsselt werden kann. Dabei kann eine Kommunikations-Vorrichtung, welche eine gesicherte Nachricht senden will, wie beispielsweise die erste Kommunikations-Vorrichtung, die Ende-zu-Ende-Verschlüsselung nur dann herstellen, wenn diese in der gleichen Gruppe wie ein festgelegter Empfänger der gesicherten Nachricht, wie beispielsweise die zweite Kommunikations-Vorrichtung, ist. Umgekehrt kann der festgelegte Empfänger die mittels der asymmetrisch verschlüsselten Punkt-zu-Punkt-Verbindung verschlüsselte und mittels des Gruppenschlüssels gesicherte Nachricht nur dann entschlüsseln, wenn er auch in der Lage ist, zuvor die Gruppenverschlüsselung zu entschlüsseln.

Durch das Bereitstellen der Ende-zu-Ende-Verschlüsselung zwischen der ersten Kommunikations-Vorrichtung und der zweiten Kommunikations-Vorrichtung wird die Sicherheit der Nachrichtenübertragung zwischen zumindest zwei Kommunikations-Vorrichtungen innerhalb der Gruppe erhöht, da eine Manipulation und eine Entschlüsselung der verschlüsselten und gesicherten Nachricht durch eine andere Kommunikations-Vorrichtung innerhalb der Gruppe, welche nicht als der festgelegter Empfänger fungiert, verhindert werden. Somit wird eine erhöhte Sicherheit beispielsweise in industriellen Protokollen sowie in Protokollen der Energieautomatisierung durch die effizientere Ausnutzung der bestehenden Gruppen-Kommunikation erzielt, bei welcher die Ende-zu-Ende-Verschlüsselung in die bestehende Gruppen-Kommunikation integriert wird, während keine zusätzlichen neuen Kommunikationskanäle innerhalb der Gruppe geöffnet werden.

Das Publish-Subscribe-System ist vorliegend insbesondere ein System, welches zumindest einen Publisher, der Daten veröffentlicht, und einen Subskribenten, der Daten subskribieren und empfangen kann, umfasst. Subskribieren kann beispielsweise auch als Abonnieren verstanden werden. Publish-Subscribe-Systeme können auch als Publikations- und Subskribtions-Systeme bezeichnet werden. Das Veröffentlichen und Subskribieren von Daten erfolgt vorzugsweise topic-basiert. Man spricht daher insbesondere von einem topic-basierten Publish-Subscribe-System. Das Topic des Publish-Subscribe-Systems ist beispielsweise ein Thema oder ein Dienst des Publish-Subscribe-Systems. Das Topic kann auch hierarchisch strukturiert sein, zum Beispiel mittels eines Topic-Baums, zum Beispiel Topic 1, Topic 2, Topic 3.

Die Kommunikations-Vorrichtung ist insbesondere eine Vorrichtung, die dazu eingerichtet ist, mit einer anderen Kommunikations-Vorrichtung zu kommunizieren und Daten auszutauschen. Die erste Kommunikations-Vorrichtung ist beispielsweise eine Server-Vorrichtung. Die zweite Kommunikations-Vorrichtung ist insbesondere eine Client-Vorrichtung. Ebenso kann die erste Kommunikations-Vorrichtung auch als Client-Vorrichtung ausgebildet sein. Die zweite Kommunikations-Vorrichtung kann auch als Server-Vorrichtung ausgebildet sein. Insbesondere die Kommunikations-Vorrichtungen innerhalb der Gruppe, welche nicht der ersten Kommunikations-Vorrichtung und der zweiten Kommunikations-Vorrichtung entsprechen, können jeweils als Server-Vorrichtung und/oder als Client-Vorrichtung ausgebildet werden.

Die Gruppe umfasst vorzugsweise zumindest zwei Kommunikations-Vorrichtungen, welche mittels eines gemeinsamen Gruppenschlüssels gesicherte Nachricht übertragen können.

Der Gruppenschlüssel ist insbesondere ein symmetrischer kryptografischer Schlüssel. Dies bedeutet, dass der Gruppenschlüssel vorzugsweise zum Ver- und Entschlüsseln von Nachrichten durch die Kommunikations-Vorrichtungen innerhalb der Gruppe verwendet wird. Jede Kommunikations-Vorrichtung innerhalb der Gruppe kann somit beispielsweise eine Nachricht ver- und/oder entschlüsseln und/oder modifizieren.

Der Schlüsselverteilserver ist vorliegend insbesondere in dem Publish-Subscribe-System als zentraler Schlüsselverteilserver oder als dezentraler Schlüsselverteilserver auf einem Zwischenknoten in dem Publish-Subscribe-System ausgebildet. Der zentrale Schlüsselverteilserver kann dabei vorzugsweise den Gruppenschlüssel den Kommunikations-Vorrichtungen der Gruppe bereitstellen.

Das Bereitstellen aus Schritt a) umfasst insbesondere eine Versorgung aller Kommunikations-Vorrichtungen der Gruppe mit identischen symmetrischen Gruppenschlüsseln. Damit eine anfragende Kommunikations-Vorrichtung einen symmetrischen Gruppenschlüssel von dem Schlüsselverteilserver erhält, wird insbesondere eine Authentifizierung der anfragenden Kommunikations-Vorrichtung an dem Schlüsselverteilserver durchgeführt. Insbesondere können somit die Nachrichten innerhalb der Gruppe gesichert übertragen werden. Die mittels Gruppenschlüssel gesicherte Nachricht gewährleistet vorzugsweise Integrität und Vertraulichkeit. Diese Art der Kommunikation innerhalb der Gruppe wird insbesondere als gesicherte Gruppen-Kommunikation bezeichnet.

Das Authentifizieren umfasst vorzugsweise kryptografische Authentifizierungsverfahren.

Unter dem Bereitstellen aus Schritt b) wird insbesonders das Bereitstellen eines Schlüsselmaterials an die erste und die zweite Kommunikations-Vorrichtung verstanden, um mittels des Schlüsselmaterials die Punkt-zu-Punkt-Verbindung asymmetrisch zu verschlüsseln. Die asymmetrisch verschlüsselbare Punkt-zu-Punkt-Verbindung ist insbesondere eine direkte Verbindung zwischen der ersten und der zweiten Kommunikations-Vorrichtung. Auch kann die asymmetrisch verschlüsselbare Punkt-zu-Punkt-Verbindung vorzugsweise eine indirekte Verbindung zwischen der ersten Kommunikations-Vorrichtung und der zweiten Kommunikations-Vorrichtung sein, bei welcher eine andere Vorrichtung zwischen der ersten und der zweiten Kommunikations-Vorrichtung angeordnet ist.

Das Übertragen der gesicherten Nachricht aus Schritt c) verläuft insbesondere kryptografisch gesichert. Kryptografisch gesichertes Übertragen kann dabei durch ein Sicherheitsprotokoll, wie beispielsweise TLS (Transport Layer Security), SSL (Secure Socket Layer), SSH (Secure Shell), IPSec (Internet Protocol Security) realisiert werden, das den gesamten Datenaustausch sichert. Alternativ können Verfahren auf höheren Schichten des OSI-Modells genutzt werden, wie zum Beispiel S/MIME beim Austausch von gesicherten E-Mails.

Unter einer Nachricht wird vorliegend insbesondere ein digitaler Datensatz, beispielsweise eine Folge von Nullen und Einsen, die auch als Bits bezeichnet werden, mit einer bestimmten Länge verstanden. Der Datensatz ist vorzugsweise innerhalb eines Datenrahmens angeordnet. Eine Nachricht weist beispielsweise einen Nutzdatenteil, wie einen ausführbaren Befehl, eine Konfigurationsinformation, eine Statusinformation und/oder einen Abfragebefehl auf und kann ferner weitere Bestandteile, wie zum Beispiel einen Integritätscheckwert (ICV, von engl. "integrity check value") in Form einer digitalen Signatur, einen Hashwert oder dergleichen aufweisen.

Unter einer mittels einer asymmetrischen Verschlüsselung verschlüsselbaren Punkt-zu-Punkt-Verbindung wird vorliegend insbesondere eine direkte und unmittelbare Verbindung verstanden, welche zwischen zwei Kommunikations-Vorrichtungen, wie beispielsweise der ersten Kommunikations-Vorrichtung und der zweiten Kommunikations-Vorrichtung innerhalb der Gruppe im Rahmen des Publish-Subscribe-Systems bereitgestellt wird.

Insbesondere wird mittels der asymmetrisch verschlüsselten Punkt-zu-Punkt-Verbindung und dem Gruppenschlüssel eine Ende-zu-Ende-Verschlüsselung zwischen der ersten und der zweiten Kommunikations-Vorrichtung innerhalb der Gruppe bereitgestellt, bei welcher beispielsweise die erste Kommunikations-Vorrichtung verschlüsselt und ausschließlich die zweite Kommunikations-Vorrichtung entschlüsseln kann. Auch kann die asymmetrisch verschlüsselbare Punkt-zu-Punkt-Verbindung indirekt über eine weitere Vorrichtung zwischen der ersten Kommunikations-Vorrichtung und der zweiten Kommunikations-Vorrichtung ausgebildet sein.

Beispielsweise wird die gesicherte Nachricht von der ersten Kommunikations-Vorrichtung oder der zweiten Kommunikations-Vorrichtung oder einer weiteren Kommunikations-Vorrichtung der Gruppe an alle Kommunikations-Vorrichtungen der Gruppe übertragen.

Vorzugsweise wird das Übertragen von der gesicherten Nachricht zwischen der ersten Kommunikations-Vorrichtung und der zweiten Kommunikations-Vorrichtung unidirektional durchgeführt.

Insbesondere wird zur Durchführung der Schritte b) und c) das bestehende Kommunikations-Protokoll der Gruppen-Kommunikation erweitert, um die verschlüsselte und gesicherte Nachricht übertragen zu können, indem für die zu übertragende Kommunikations-Vorrichtung sichtbar gemacht wird, welche Kommunikations-Vorrichtung als der festgelegte Empfänger der verschlüsselten und gesicherten Nachricht fungiert. Hierbei wird beispielsweise eine Erweiterung vorgeschlagen, welche in das bestehende Kommunikations-Protokoll der Gruppen-Kommunikation, wie insbesondere OPC-UA, MQTT oder XMPP, eingebunden werden kann.

Gemäß einer Ausführungsform wird eine Anzahl Z, mit Z ≥ 1, von Zertifikaten umfassend jeweils den zumindest einen öffentlichen Schlüssel mittels des Schlüsselverteilservers an die erste Kommunikations-Vorrichtung und/oder an die zweite Kommunikations-Vorrichtung verteilt.

Das Zertifikat ist insbesondere ein digitales Zertifikat, welches einen öffentlichen Schlüssel umfasst. Beispielsweise ist das digitale Zertifikat nach dem X.509 Standard ausgebildet. Das digitale Zertifikat beinhaltet insbesondere digitale Daten, welche beispielsweise Eigenschaften von Personen oder Objekten bestätigen. Vorzugsweise dient das digitale Zertifikat zur Bestätigung der Identität eines Inhabers, wie beispielsweise der zweiten Kommunikations-Vorrichtung, und zur Sicherstellung einer Integrität und Vertraulichkeit der übertragenen Daten mittels kryptografischer Verfahren. Kryptografische Verfahren umfassen beispielsweise asymmetrische Verschlüsselungsverfahren sowie symmetrische Verschlüsselungsverfahren. Darunter fallen zum Beispiel RSA (Rivest, Shamir, Adleman), ECDSA (Elliptic Curve Digital Signature Algorithm), AES (Advanced Encryption Standard), inklusive bestimmter Betriebsmodi symmetrischer Algorithmen, wie z.B. GMAC (Galois Message Authentication Code), sowie der Diffie-Hellman-Schlüsselaustausch.

Insbesondere verteilt der Schlüsselverteilserver die Gruppenschlüssel und die digitalen Zertifikate, welche jeweils einen öffentlichen Schlüssel umfassen, an die ausgewählten Kommunikations-Vorrichtungen innerhalb der Gruppe. Auch können beispielsweise die digitalen Zertifikate der Kommunikations-Vorrichtungen der Gruppe lokal auf einer Speicher-Einheit abgespeichert sein, wobei jede Kommunikations-Vorrichtung auch Zugriff auf die digitalen Zertifikate der anderen Kommunikations-Vorrichtungen hat.

Der öffentliche Schlüssel ist vorzugsweise ein kryptografisch bestätigter Schlüssel. Insbesondere ist der öffentliche Schlüssel nicht geheim. Beispielsweise wird der öffentliche Schlüssel mittels eines Schlüsselverteilservers an andere Kommunikations-Vorrichtungen verteilt. Mittels des öffentlichen Schlüssels können insbesondere öffentliche Operationen durchgeführt werden, also Nachrichten verschlüsselt oder digitale Signaturen geprüft werden. Hierbei kann ein öffentlicher Schlüssel eindeutig einer Kommunikations-Vorrichtung zugeordnet werden. Der öffentliche Schlüssel wird insbesondere mittels eines Fingerprints (beispielsweise ein Hashwert) eindeutig gekennzeichnet.

Gemäß einer weiteren Ausführungsform verschlüsselt die erste Kommunikations-Vorrichtung die Nachricht mittels des öffentlichen Schlüssels der zweiten Kommunikations-Vorrichtung, sichert die verschlüsselte Nachricht mittels des Gruppenschlüssels und überträgt die gesicherte und verschlüsselte Nachricht an die zweite Kommunikations-Vorrichtung.

Insbesondere entschlüsselt anschließend die zweite Kommunikations-Vorrichtung mit ihrem privaten Schlüssel die mittels des öffentlichen Schlüssels der zweiten Kommunikations-Vorrichtung verschlüsselte gesicherte Nachricht. Der öffentliche Schlüssel und der private Schlüssel der zweiten Kommunikations-Vorrichtung bilden vorzugsweise ein Schlüsselpaar, mittels welchem eine asymmetrische Verschlüsselung von Nachrichten realisiert wird. Dies hat insbesondere den Vorteil, dass ausschließlich die Kommunikations-Vorrichtung, welcher der öffentliche Schlüssel zum Verschlüsseln der Nachricht zugeordnet ist, auch in der Lage ist, mittels des eigenen privaten Schlüssels die verschlüsselte Nachricht wieder zu entschlüsseln. Beispielsweise wird die verschlüsselte Nachricht gesichert mit dem Gruppenschlüssel an alle Kommunikations-Vorrichtungen innerhalb der Gruppe übertragen und nur die Kommunikations-Vorrichtung, in diesem Beispielfall die zweite Kommunikations-Vorrichtung, ist in der Lage mittels des privaten Schlüssels die übertragene gesicherte und verschlüsselte Nachricht zu entschlüsseln.

Der private Schlüssel einer Kommunikations-Vorrichtung, wie beispielsweise der zweiten Kommunikations-Vorrichtung, wird vorzugsweise zum Entschlüsseln der verschlüsselten und gesicherten Nachricht oder zum Signieren der verschlüsselten und gesicherten Nachricht verwendet. Insbesondere verfügt im Gegensatz zu einem symmetrischen Verschlüsselungsverfahren, bei dem sich mehrere Kommunikations-Vorrichtungen einen geheimen Schlüssel teilen, bei asymmetrischen Verschlüsselungsverfahren nur eine Kommunikations-Vorrichtung über den privaten Schlüssel zum Entschlüsseln der verschlüsselten und gesicherten Nachricht. Der private Schlüssel einer Kommunikations-Vorrichtung ist insbesondere geheim. Somit haben die anderen Kommunikations-Vorrichtungen innerhalb der Gruppe keine Informationen über den geheimen privaten Schlüssel der Kommunikations-Vorrichtung.

Gemäß einer weiteren Ausführungsform ist eine dritte Kommunikations-Vorrichtung der Gruppe als eine Übermittlungs-Vorrichtung zwischen der ersten und der zweiten Kommunikations-Vorrichtung angeordnet, wobei die mittels des Gruppenschlüssels gesicherte und mittels des öffentlichen Schlüssels der zweiten Kommunikations-Vorrichtung verschlüsselte Nachricht von der ersten Kommunikations-Vorrichtung über die Übermittlungs-Vorrichtung an die zweite Kommunikations-Vorrichtung übermittelt wird.

Die Übermittlungs-Vorrichtung hat den Vorteil, dass diese, zusätzlich zur Verteilung des symmetrischen Gruppenschlüssels und der digitalen Zertifikate, außerdem dazu eingerichtet ist, zumindest eine verschlüsselte und gesicherte Nachricht an zumindest eine der Kommunikations-Vorrichtungen der Gruppe zu übermitteln. Dies ermöglicht eine Übermittlung von verschlüsselten und gesicherten Nachrichten nicht ausschließlich nur zwischen zwei Kommunikations-Vorrichtungen, wie der ersten Kommunikations-Vorrichtung und der zweiten Kommunikations-Vorrichtung, sondern mittels der Übermittlungs-Vorrichtung können insbesondere verschlüsselte und gesicherte Nachrichten an alle Subskribenten oder ausgewählte Kommunikations-Vorrichtungen der Gruppe übermittelt werden.

Vorzugsweise ist die Übermittlungs-Vorrichtung eine Vorrichtung zur Übermittlung von Nachrichten, Gruppenschlüsseln und digitalen Zertifkaten in einem Publish-Subscribe-System und ist insbesondere als ein Message Broker ausgebildet. Publish-Subscribe-Systeme umfassen insbesondere einerseits Message Broker-basierte Verfahren und andererseits Broker-Less-basierten Verfahren.

Vorzugsweise können sich in einem Message Broker-basierten Publish-Subscribe-System Subskribenten bei dem Message Broker auf Topics subskribieren und bekommen die entsprechenden Nachrichten zugestellt, wenn ein Publisher eine Nachricht zu diesem Topic über den Message Broker veröffentlicht. Der Message Broker umfasst insbesondere ein Verzeichnis mit den digitalen Zertifikaten, also auch den öffentlichen Schlüssel der Kommunikations-Vorrichtungen innerhalb der Gruppe und kann einen öffentlichen Schlüssel beispielsweise einer Kommunikations-Vorrichtung an eine anfragende Kommunikations-Vorrichtung übermitteln. Weiterhin übermittelt der Message Broker vorzugsweise mittels des Gruppenschlüssels verschlüsselte und gesicherte Nachrichten an die Subskribenten. Ferner verteilt der Message Broker beispielsweise den symmetrischen Gruppenschlüssel an die ausgewählten Kommunikations-Vorrichtungen innerhalb der Gruppe. Auch kann der Message Broker insbesondere die Authentizität einer anfragenden Kommunikations-Vorrichtung mittels einer digitalen Signatur der anfragenden Kommunikations-Vorrichtung überprüfen.

Bei dem Broker-Less-basierten Verfahren umfasst eine Gruppen-Kommunikation lediglich die einzelnen Kommunikations-Vorrichtungen und keinen Message Broker. Dabei werden Multicast-Adressen verschiedene Topics zugeordnet. Die Kommunikations-Vorrichtungen, welche an einem Topic interessiert sind, sind dann Subskribenten einer oder mehrerer Multicast-Adressen.

Insbesondere kann die dritte Kommunikations-Vorrichtung, um Auskunft über die digitalen Zertifikate der Kommunikations-Vorrichtungen innerhalb der Gruppe zu geben, als LDAP-Speicher ("Lightweight Directory Access Protocol" repository) ausgebildet sein.

Vorzugsweise entspricht die Verbindung von der ersten Kommunikations-Vorrichtung über die Übermittlungs-Vorrichtung an die zweite Kommunikations-Vorrichtung einer indirekten und mittelbaren Punkt-zu-Punkt-Verbindung. Die verschlüsselte und gesicherte Nachricht wird somit vorzugsweise indirekt von der ersten Kommunikations- Vorrichtung über die Übermittlungs-Vorrichtung an die zweite Kommunikations-Vorrichtung übermittelt. Hierdurch wird ebenfalls eine Ende-zu-Ende-Verschlüsselung hergestellt.

Gemäß einer weiteren Ausführungsform ist der Schlüsselverteilserver als Teil der Übermittlungs-Vorrichtung ausgebildet.

Insbesondere kann der Schlüsselverteilserver auch extern zu der Übermittlungs-Vorrichtung ausgebildet sein. Der Schlüsselverteilserver ist insbesondere nicht Teil der Gruppe, sondern stellt lediglich die Gruppenschlüssel und digitalen Zertifikate für die ausgewählten Kommunikations-Vorrichtungen innerhalb der Gruppe bereit. Ebenso ist es beispielsweise denkbar, dass der Schlüsselverteilserver als Teil der Gruppe ausgebildet ist.

In beiden Fällen wird beispielsweise eine Authentisierung einer Übermittlungs-Vorrichtung und auch Autorisierungsprüfung bei der Anfrage nach einem Gruppenschlüssel durchgeführt.

Gemäß einer weiteren Ausführungsform wird die mittels des Gruppenschlüssels gesicherte und mittels des öffentlichen Schlüssels der zweiten Kommunikations-Vorrichtung verschlüsselte Nachricht mittels eines privaten Schlüssels der ersten Kommunikations-Vorrichtung zur Ausbildung einer digitalen Signatur signiert, wobei ein Datenrahmen aufweisend die gesicherte und verschlüsselte Nachricht sowie die digitale Signatur von der ersten Kommunikations-Vorrichtung an die zweite Kommunikations-Vorrichtung übertragen wird.

Diese Ausführungsform wird insbesondere bei zu kleinen übertragenden Nachrichten verwendet, bei dem direkt das asymmetrische Verfahren zur Verschlüsselung verwendet wird. Durch das hierbei verwendete asymmetrische Verschlüsselungsverfahren erhöht sich die Sicherheit der Nachrichtenübertragung. Ferner kann die Überprüfung der Authentifikation einer Kommunikations-Vorrichtung mittels einer elektronischen Unterschrift, der sogenannten digitalen Signatur vor der Nachrichtenübertragung durchgeführt werden.

Unter einer digitalen Signatur wird vorliegend insbesondere ein digitales Signaturverfahren verstanden, bei welchem ein Sender, beispielsweise die erste Kommunikations-Vorrichtung, mittels seines privaten Schlüssels die verschlüsselte und gesicherte Nachricht signiert. Das Signieren umfasst die Berechnung eines Wertes, welcher insbesondere Teil der verschlüsselten und gesicherten Nachricht ist und/oder der verschlüsselten und gesicherten Nachricht angehängt wird. Dieser Wert wird insbesondere als "Digitale Signatur" bezeichnet. Mittels dieses Wertes kann vorzugsweise ein Empfänger, beispielsweise die zweite Kommunikations-Vorrichtung, die Authentizität der ersten Kommunikations-Vorrichtung und die Integrität der verschlüsselten und gesicherten Nachricht mittels des öffentlichen Schlüssels der ersten Kommunikations-Vorrichtung überprüfen.

Ein Datenrahmen umfasst vorzugsweise einen Datensatz oder eine Mehrzahl an Datensätzen, welche die verschlüsselte und gesicherte Nachricht und zusätzliche Daten, wie beispielsweise die digitale Signatur und/oder andere sicherheitsrelevante Daten, umfassen und insbesondere zwischen der ersten Kommunikations-Vorrichtung und der zweiten Kommunikations-Vorrichtung und/oder zwischen dem Message Broker und zumindest einer der Kommunikations-Vorrichtungen der Gruppe und/oder zwischen einer Adresse und zumindest einer der Kommunikations-Vorrichtungen der Gruppe übertragen werden.

Ein Datenrahmen umfasst insbesondere eine Kennung (ID, Identifizierung) einer oder mehrerer Kommunikations-Vorrichtungen, welche die verschlüsselte und gesicherte Nachricht empfangen, beispielsweise einen Diffie-Hellmann-Parameter der sendenden Kommunikations-Vorrichtung, die Schlüssellänge der einzelnen Schlüssel, die Größe des Datenrahmens, einen eindeutigen Bezeichner für eine Schlüsselableitung, wie beispielsweise HKDF (Hashed Message Authentication Code (HMAC)-based key derivation function), PBKDF2 (Password Based Key Derivation Function), oder Hash Algorithmen wie SHA-256, einen weiteren eindeutigen Bezeichner für den Algorithmus zum Schutz der übertragenen Daten innerhalb des Datenrahmens, einen Initialisierungsvektor für den Algorithmus, die verschlüsselte und gesicherte Nachricht und einen Prüfwert zur Überprüfung der Integrität der verschlüsselten und gesicherten Nachricht. Andere Informationen und Datensätze innerhalb des Datenrahmens sind denkbar.

Insbesondere beinhaltet die zu übertragende oder übertragene verschlüsselte und gesicherte Nachricht innerhalb des Datenrahmens öffentliche und private (geheime) Anteile. Die öffentlichen Anteile der verschlüsselten und gesicherten Nachricht können vorzugsweise von den Kommunikations-Vorrichtungen der Gruppe gelesen werden, an welche die verschlüsselte und gesicherte Nachricht übertragen wird, wohingegen die privaten Anteile ausschließlich von der Kommunikations-Vorrichtung gelesen werden können, welche als festgelegter Empfänger der verschlüsselten und gesicherten Nachricht fungiert. Ein Beispiel für einen öffentlichen Anteil ist der Header-Anteil des Publish-Subscribe-Systems, welchen alle Kommunikations-Vorrichtungen innerhalb der Gruppe aufweisen. Beispiele für den privaten Anteil sind die Peer-to-Peer-Informationen und die Sicherheitsinformationen.

Gemäß einer weiteren Ausführungsform wird die mittels des Gruppenschlüssels gesicherte Nachricht durch ein von der ersten Kommunikations-Vorrichtung erzeugtes Geheimnis mittels der ersten Kommunikations-Vorrichtung verschlüsselt und das Geheimnis mittels des öffentlichen Schlüssels der zweiten Kommunikations-Vorrichtung durch die erste Kommunikations-Vorrichtung verschlüsselt, wobei ein Datenrahmen aufweisend die gesicherte und durch das Geheimnis verschlüsselte Nachricht sowie das durch den öffentlichen Schlüssel der zweiten Kommunikations-Vorrichtung verschlüsselte Geheimnis von der ersten Kommunikations-Vorrichtung an die zweite Kommunikations-Vorrichtung übertragen wird.

Diese Ausführungsform wird insbesondere bei zu übertragenden Nachrichten verwendet, welche große Datenmengen aufweisen.

Das erzeugte Geheimnis ist insbesondere ein symmetrischer Schlüssel. Mittels eines symmetrischen Schlüssels kann beispielsweise eine gesicherte Nachricht ver- und entschlüsselt werden.

Die Verwendung des symmetrischen Schlüssels zur Verschlüsselung der gesicherten Nachricht weist den Vorteil auf, dass die Datenmengen, im Vergleich zur einer reinen asymmetrischen Verschlüsselung, bei welcher ein öffentlicher Schlüsseln zur Verschlüsselung der gesicherten Nachricht verwendet wird, reduziert werden. Durch diese Reduktion der asymmetrisch zu verschlüsselnden Daten kann die Geschwindigkeit der Verschlüsselung der Ende-zu-Ende geschützten Nachricht erhöht werden.

Gemäß einer weiteren Ausführungsform wird die mittels des Gruppenschlüssels gesicherte und mittels des Geheimnisses verschlüsselte Nachricht zusätzlich durch die erste Kommmunikations-Vorrichtung mittels eines privaten Schlüssels zur Ausbildung einer digitalen Signatur signiert, wobei der Datenrahmen aufweisend zusätzlich die digitale Signatur von der ersten Kommunikations-Vorrichtung an die zweite Kommunikations-Vorrichtung übertragen wird.

Gemäß einer weiteren Ausführungsform wird mittels der ersten Kommunikations-Vorrichtung eine Schlüsseltabelle umfassend eine Anzahl G, mit G ≥ 1, von Geheimnissen erzeugt, wobei die erste Kommunikations-Vorrichtung mittels eines Geheimnisses aus der Anzahl G von Geheimnissen die durch den Gruppenschlüssel gesicherte Nachricht verschlüsselt und das Geheimnis mittels des öffentlichen Schlüssels der zweiten Kommunikations-Vorrichtung verschlüsselt und mittels eines privaten Schlüssels der ersten Kommunikations-Vorrichtung zur Ausbildung einer digitalen Signatur das verschlüsselte Geheimnis signiert, wobei ein Datenrahmen aufweisend die gesicherte und durch das Geheimnis verschlüsselte Nachricht, die digitale Signatur sowie das durch den öffentlichen Schlüssel der zweiten Kommunikations-Vorrichtung verschlüsselte Geheimnis von der ersten Kommunikations-Vorrichtung an die zweite Kommunikations-Vorrichtung übertragen wird.

Die Schlüsseltabelle umfasst vorzugsweise eine Anzahl G, mit G ≥ 1, von Geheimnissen. Das Geheimnis ist insbesondere als ein symmetrischer Schlüssel ausgebildet.

Jeder symmetrische Schlüssel der Schlüsseltabelle weist insbesondere eine eindeutige Bezeichnung auf. Beispielsweise verschlüsselt die erste Kommunikations-Vorrichtung die gesicherte Nachricht mit dem symmetrischen Schlüssel aus einer "Zeile 8" der Schlüsseltabelle. Insbesondere wird die eindeutige Bezeichnung "Zeile 8" mittels des öffentlichen Schlüssels der zweiten Kommunikations-Vorrichtung verschlüsselt. Nun werden die mittels des symmetrischen Schlüssels verschlüsselte und gesicherte Nachricht sowie die mittels des öffentlichen Schlüssels verschlüsselte eindeutige Bezeichnung des symmetrischen Schlüssels innerhalb des Datenrahmens an die zweite Kommunikations-Vorrichtung übertragen. Anschließend entschlüsselt die zweite Kommunikations-Vorrichtung mittels ihres privaten Schlüssels die eindeutige Bezeichnung und erhält nun Auskunft darüber, welcher symmetrische Schlüssel in welcher "Zeile" zur Verschlüsselung verwendet wird. Dann kann insbesondere die zweite Kommunikations-Vorrichtung mittels des erhaltenen symmetrischen Schlüssels aus "Zeile 8" die verschlüsselte und gesicherte Nachricht entschlüsseln.

Gemäß einer weiteren Ausführungsform verwendet die erste Kommunikations-Vorrichtung den öffentlichen Schlüssel der zweiten Kommunikations-Vorrichtung als einen festgelegten Schlüsselanteil und erzeugt einen eigenen Schlüsselanteil, wobei mittels der ersten Kommunikations-Vorrichtung ein weiteres Geheimnis umfassend eine Kombination des festgelegten Schlüsselanteils und des eigenen Schlüsselanteils berechnet wird und das weitere Geheimnis zur Verschlüsselung der gesicherten Nachricht verwendet wird, wobei ein Datenrahmen aufweisend die gesicherte und verschlüsselte Nachricht sowie den eigenen Schlüsselanteil von der ersten Kommunikations-Vorrichtung an die zweite Kommunikations-Vorrichtung übertragen wird.

Das weitere Geheimnis ist beispielsweise ein symmetrischer Schlüssel, vorzugsweise ein symmetrischer Schlüssel als Ergebnis einer Diffie-Hellmann-Schlüsselaushandlung.

Der festgelegte Schlüsselanteil aus dem beispielsweise öffentlichen Schlüssel der zweiten Kommunikations-Vorrichtung ist vorliegend beispielsweise ein festgelegter und öffentlicher Diffie-Hellmann-Schlüsselanteil. Der eigene Schlüsselanteil ist vorliegend insbesondere der private Diffie-Hellmann-Schlüsselanteil. Mittels der Kombination des öffentlichen und des privaten Schlüsselanteils wird der symmetrische Diffie-Hellmann-Schlüssel gebildet, mit welchem die gesicherte Nachricht verschlüsselt wird.

Gemäß einer weiteren Ausführungsform wird die mittels des Gruppenschlüssels gesicherte und mittels des weiteren Geheimnisses verschlüsselte Nachricht zusätzlich mittels eines privaten Schlüssels der ersten Kommmunikations-Vorrichtung zur Ausbildung einer digitalen Signatur signiert, wobei der Datenrahmen aufweisend zusätzlich die digitale Signatur von der ersten Kommunikations-Vorrichtung an die zweite Kommunikations-Vorrichtung übertragen wird.

Gemäß einer weiteren Ausführungsform wird eine Anzahl N von mittels des Gruppenschlüssels gesicherten Nachrichten, mit N ≥ 2, bidirektional und/oder unidirektional zwischen der ersten und der zweiten Kommunikations-Vorrichtung über die bereitgestellte verschlüsselte Punkt-zu-Punkt-Verbindung übertragen.

Insbesonders wird das Übertragen von gesicherten Nachrichten zwischen der dritten Kommunikations-Vorrichtung und/oder der ersten Kommunikations-Vorrichtung und/oder der zweiten Kommunikations-Vorrichtung bidirektional und/oder unidirektional durchgeführt.

Gemäß einer weiteren Ausführungsform wird mittels der ersten Kommunikations-Vorrichtung eine Schlüsseltabelle umfassend eine Anzahl G, mit G ≥ 2, von Geheimnissen erzeugt, wobei jedem der Geheimnisse aus der Anzahl G der Geheimnisse eine bestimmte Kennzeichnung zugeordnet wird, wobei die erste Kommunikations-Vorrichtung mittels eines ersten der Geheimnisse eine durch den Gruppenschlüssel gesicherte erste Nachricht verschlüsselt und mittels eines zweiten der Geheimnisse eine durch den Gruppenschlüssel gesicherte zweite Nachricht verschlüsselt, wobei die Schlüsseltabelle mittels des öffentlichen Schlüssels der zweiten Kommunikations-Vorrichtung durch die erste Kommunikations-Vorrichtung verschlüsselt wird, wobei die erste Kommunikations-Vorrichtung die verschlüsselte Schlüsseltabelle zur Ausbildung einer digitalen Signatur signiert, wobei ein Datenrahmen aufweisend die gesicherte und durch das erste Geheimnis verschlüsselte erste Nachricht, die gesicherte und durch das zweite Geheimnis verschlüsselte zweite Nachricht, die durch den öffentlichen Schlüssel verschlüsselte Schlüsseltabelle, die digitale Signatur sowie die bestimmte Kennzeichnung für zumindest das erste und zweite Geheimnis von der ersten Kommunikations-Vorrichtung an die zweite Kommunikations-Vorrichtung übertragen wird.

Das Geheimnis ist insbesondere ein symmetrischer Schlüssel. Jedem der symmetrischen Schlüssel wird eine eindeutige Bezeichnung zugeordnet. Nun können eine Vielzahl an gesicherten Nachrichten mittels der symmetrischen Schlüssel verschlüsselt werden. Beispielsweise erhält eine erste Nachricht den symmetrischen Schlüssel aus "Zeile 8", eine zweite Nachricht den symmetrischen Schlüssel aus "Zeile 2" und eine dritte Nachricht den symmetrischen Schlüssel aus "Zeile 7". Hierdurch wird jeder Nachricht eine eindeutige Bezeichnung zugeordnet, mit welcher die zweite Kommunikations-Vorrichtung die jeweilige Nachricht anschließend entschlüsseln kann.

Gemäß einer weiteren Ausführungsform verwendet die erste Kommunikations-Vorrichtung den öffentlichen Schlüssel der zweiten Kommunikations-Vorrichtung als einen festgelegten Schlüsselanteil und erzeugt einen eigenen Schlüsselanteil, wobei durch die erste Kommunikations-Vorrichtung ein weiteres Geheimnis umfassend eine Kombination des festgelegten Schlüsselanteils und des eigenen Schlüsselanteils berechnet wird und das weitere Geheimnis von der ersten Kommunikations-Vorrichtung gespeichert wird, wobei aus dem weiteren Geheimnis mittels einer Schlüsselableitungsfunktion spezifische Schlüssel für die Anzahl N von mittels des Gruppenschlüssels gesicherten Nachrichten zur Verschlüsselung dieser abgeleiten werden, wobei ein Datenrahmen aufweisend die Anzahl N von gesicherten und verschlüsselten Nachrichten und die spezifischen Schlüssel sowie den eigenen Schlüsselanteil von der ersten Kommunikations-Vorrichtung an die zweite Kommunikations-Vorrichtung übertragen wird, wobei die zweite Kommunikations-Vorrichtung das weitere Geheimnis speichert.

Gemäß einer weiteren Ausführungsform wird ein separater Kommunikationskanal zwischen zwei Kommunikations-Vorrichtungen aufgebaut, um eine asymmetrisch verschlüsselte Punkt-zu-Punkt-Verbindung außerhalb der Gruppe durchzuführen.

Gemäß einem zweiten Aspekt wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, Blue-Ray oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird eine Vorrichtung zum Übertragen von Daten in einem Publish-Subscribe-System umfassend einen Schlüsselverteilserver und eine Mehrzahl von mit dem Schlüsselverteilserver koppelbaren Kommunikations-Vorrichtungen umfassend zumindest eine Server-Vorrichtung und eine Anzahl von Client-Vorrichtungen vorgeschlagen. Die Vorrichtung umfasst:
- eine erste Bereitstellungs-Einheit, welche dazu eingerichtet ist, einen Gruppenschlüssels durch den Schlüsselverteilserver an eine Gruppe ausgewählt aus den Kommunikations-Vorrichtungen zur Schaffung einer durch den Gruppenschlüssel gesicherten Gruppen-Kommunikation innerhalb der Gruppe der ausgewählten Kommunikations-Vorrichtungen bereitzustellen,
- eine zweite Bereitstellungs-Einheit, welche dazu eingerichtet ist, eine mittels eines öffentlichen Schlüssels einer asymmetrischen Verschlüsselung verschlüsselbaren Punkt-zu-Punkt-Verbindung zwischen einer ersten und einer zweiten Kommunikations-Vorrichtung der Gruppe bereitzustellen, und
- eine Übertragungs-Einheit, welche dazu eingerichtet ist, eine mittels des öffentlichen Schlüssels für die Punkt-zu-Punkt-Verbindung verschlüsselte und mittels des Gruppenschlüssels gesicherte Nachricht zwischen der ersten und der zweiten Kommunikations-Vorrichtung über die bereitgestellte verschlüsselte Punkt-zu-Punkt-Verbindung zu übertragen.

Die jeweilige Einheit, zum Beispiel die Bereitstellungs-Einheit oder die Übertragungs-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die für die vorgeschlagene Vorrichtung beschriebenen Ausführungsformen und Merkmale gelten für das vorgeschlagene Verfahren entsprechend.

Gemäß einem vierten Aspekt wird ein Publish-Subscribe-System vorgeschlagen, welches zumindest einen Schlüsselverteilserver und eine Mehrzahl von mit dem Schlüsselverteilserver koppelbaren Kommunikations-Vorrichtungen und zumindest eine Vorrichtung gemäß dem dritten Aspekt umfasst.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Ablaufdiagramm eines Ausführungsbeispiels eines Verfahrens zum Übertragen von Daten in einem Publish-Subscribe-System;
- Fig. 2: zeigt ein schematisches Blockdiagramm eines Ausführungsbeispiels eines Publish-Subscribe-Systems zum Übertragen von Daten mit einer Übermittlungs-Vorrichtung und Kommunikations-Vorrichtungen;
- Fig. 3: zeigt ein schematisches Blockdiagramm eines Ausführungsbeispiels eines Publish-Subscribe-Systems zum Übertragen von Daten mit einer Übermittlungs-Vorrichtung, einem Schlüsselverteilserver und Kommunikations-Vorrichtungen;
- Fig. 4: zeigt einen schematischen Ablaufplan eines Ausführungsbeispiels eines Verfahrens zum Übertragen von zumindest einer Nachricht zwischen der ersten Kommunikations-Vorrichtung und zumindest der zweiten Kommunikations-Vorrichtung mittels einer ÜbermittlungsVorrichtung innerhalb eines Publish-Subscribe-Systems;
- Fig. 5: zeigt ein schematisches Blockdiagramm eines Ausführungsbeispiels eines Publish-Subscribe-Systems zum Übertragen von Daten mit einem Schlüsselverteilserver und Kommunikations-Vorrichtungen; und
- Fig. 6: zeigt ein schematisches Blockdiagramm eines Ausführungsbeispiels einer Vorrichtung zum Übertragen von Daten in einem Publish-Subscribe-System.

In den Figuren sind gleiche oder funktionsgleiche Elemente mit denselben Bezugszeichen versehen worden, sofern nichts anderes angegeben ist.

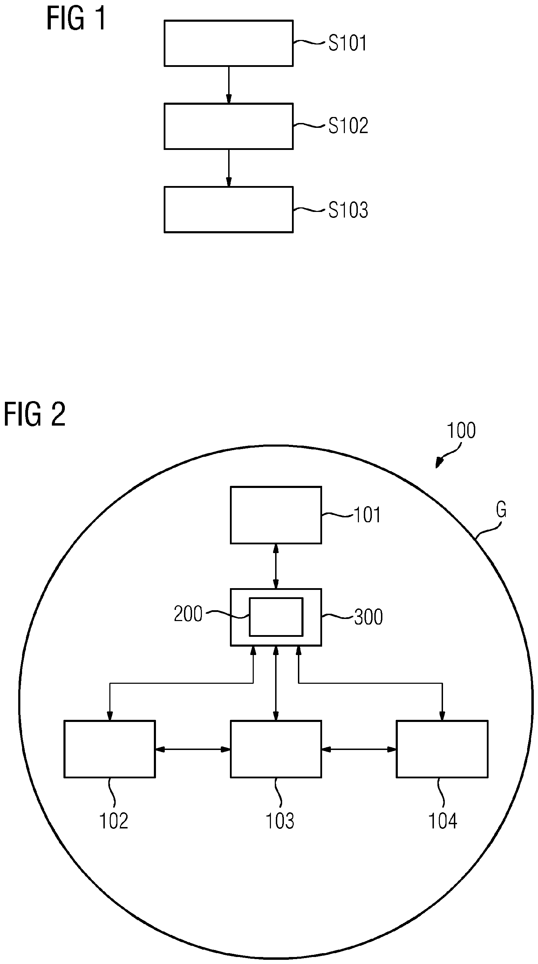

Fig. 1 zeigt ein schematisches Ablaufdiagramm eines Ausführungsbeispiels eines Verfahrens zum Übertragen von Daten in einem Publish-Subscribe-System 100. Hierzu zeigt die Fig. 2 ein schematisches Blockdiagramm eines Ausführungsbeispiels des Publish-Subscribe-Systems 100 zum Übertragen von Daten. Das Publish-Subscribe-System 100 umfasst eine Übermittlungs-Vorrichtung 300 und eine Gruppe G umfassend Kommunikations-Vorrichtungen 101 bis 104. Die Kommunikations-Vorrichtung 101 wird insbesondere als erste Kommunikations-Vorrichtung bezeichnet, während die Kommunikations-Vorrichtung 102 vorzugsweise als zweite Kommunikations-Vorrichtung bezeichnet wird.

Die Übermittlungs-Vorrichtung 300 ist insbesondere als eine dritte Kommunikations-Vorrichtung innerhalb der Gruppe G ausgebildet und ist vorzugsweise zwischen der ersten und der zweiten Kommunikations-Vorrichtung 101, 102 angeordnet. Dabei wird die mittels des Gruppenschlüssels gesicherte und mittels des öffentlichen Schlüssels der zweiten Kommunikations-Vorrichtung 102 verschlüsselte Nachricht von der ersten Kommunikations-Vorrichtung 101 über die Übermittlungs-Vorrichtung 300 an die zweite Kommunikations-Vorrichtung 102 übermittelt.

Weiterhin ist ein Schlüsselverteilserver 200 vorgesehen, der in dem Beispiel der Fig. 2 als Teil der Übermittlungs-Vorrichtung 300 ausgebildet ist.

Das Ausführungsbeispiel der Fig. 1 umfasst die folgenden Verfahrensschritte S101 bis S103:
In dem Schritt S101 wird ein Gruppenschlüssel durch den Schlüsselverteilserver 200 an die Gruppe G ausgewählt aus den Kommunikations-Vorrichtungen 101, 102, 103, 104 zur Schaffung einer durch den Gruppenschlüssel gesicherten Gruppen-Kommunikation innerhalb der Gruppe G der ausgewählten Kommunikations-Vorrichtungen 101, 102, 103, 104 bereitgestellt.

Insbesondere wird eine Anzahl Z, mit Z ≥ 1, von Zertifikaten umfassend jeweils den zumindest einen öffentlichen Schlüssel mittels des Schlüsselverteilservers 200 an die erste Kommunikations-Vorrichtung 101 und an die zweite Kommunikations-Vorrichtung 102 verteilt.

In dem Schritt S102 wird eine mittels eines öffentlichen Schlüssels einer asymmetrischen Verschlüsselung verschlüsselbare Punkt-zu-Punkt-Verbindung zwischen der ersten und der zweiten Kommunikations-Vorrichtung 101, 102 der Gruppe G bereitgestellt.

In dem Schritt S103 wird eine mittels des öffentlichen Schlüssels für die Punkt-zu-Punkt-Verbindung verschlüsselte und mittels des Gruppenschlüssels gesicherte Nachricht zwischen der ersten und der zweiten Kommunikations-Vorrichtung 101, 102 übertragen.

Vorzugsweise verschlüsselt die erste Kommunikations-Vorrichtung 101 die Nachricht mittels des öffentlichen Schlüssels der zweiten Kommunikations-Vorrichtung 102, sichert die verschlüsselte Nachricht mittels des Gruppenschlüssels und überträgt die gesicherte und verschlüsselte Nachricht an die zweite Kommunikations-Vorrichtung 102.

Insbesondere wird die mittels des Gruppenschlüssels gesicherte und mittels des öffentlichen Schlüssels der zweiten Kommunikations-Vorrichtung 102 verschlüsselte Nachricht mittels eines privaten Schlüssels der ersten Kommunikations-Vorrichtung 101 zur Ausbildung einer digitalen Signatur. Ein Datenrahmen aufweisend die gesicherte und verschlüsselte Nachricht sowie die digitale Signatur wird anschließend von der ersten Kommunikations-Vorrichtung 101 an die zweite Kommunikations-Vorrichtung 102 übertragen.

Die mittels des Gruppenschlüssels gesicherte Nachricht wird vorzugsweise durch ein von der ersten Kommunikations-Vorrichtung 101 erzeugtes Geheimnis mittels der ersten Kommunikations-Vorrichtung 101 verschlüsselt und das Geheimnis wird mittels des öffentlichen Schlüssels der zweiten Kommunikations-Vorrichtung 102 durch die erste Kommunikations-Vorrichtung 101 verschlüsselt. Dann wird ein Datenrahmen aufweisend die gesicherte und durch das Geheimnis verschlüsselte Nachricht sowie das durch den öffentlichen Schlüssel der zweiten Kommunikations-Vorrichtung verschlüsselte Geheimnis von der ersten Kommunikations-Vorrichtung 101 an die zweite Kommunikations-Vorrichtung 102 übertragen.

Insbesondere wird die mittels des Gruppenschlüssels gesicherte und mittels des Geheimnisses verschlüsselte Nachricht zusätzlich durch die erste Kommmunikations-Vorrichtung 101 mittels eines privaten Schlüssels zur Ausbildung einer digitalen Signatur signiert. Anschließend wird der Datenrahmen aufweisend zusätzlich die digitale Signatur von der ersten Kommunikations-Vorrichtung 101 an die zweite Kommunikations-Vorrichtung 102 übertragen.

Vorzugsweise wird mittels der ersten Kommunikations-Vorrichtung 101 eine Schlüsseltabelle umfassend eine Anzahl G, mit G ≥ 1, von Geheimnissen erzeugt. Hierbei verschlüsselt die erste Kommunikations-Vorrichtung 101 mittels eines Geheimnisses aus der Anzahl G von Geheimnissen die durch den Gruppenschlüssel gesicherte Nachricht und verschlüsselt das Geheimnis mittels des öffentlichen Schlüssels der zweiten Kommunikations-Vorrichtung 102 und signiert mittels eines privaten Schlüssels der ersten Kommunikations-Vorrichtung 101 zur Ausbildung einer digitalen Signatur das verschlüsselte Geheimnis.Dann wird ein Datenrahmen aufweisend die gesicherte und durch das Geheimnis verschlüsselte Nachricht, die digitale Signatur sowie das durch den öffentlichen Schlüssel der zweiten Kommunikations-Vorrichtung 102 verschlüsselte Geheimnis von der ersten Kommunikations-Vorrichtung 101 an die zweite Kommunikations-Vorrichtung 102 übertragen.

Die erste Kommunikations-Vorrichtung 101 verwendet insbesondere den öffentlichen Schlüssel der zweiten Kommunikations-Vorrichtung 102 als einen festgelegten Schlüsselanteil und erzeugt einen eigenen Schlüsselanteil, wobei mittels der ersten Kommunikations-Vorrichtung 101 ein weiteres Geheimnis umfassend eine Kombination des festgelegten Schlüsselanteils und des eigenen Schlüsselanteils berechnet wird und das weitere Geheimnis zur Verschlüsselung der gesicherten Nachricht verwendet wird. Daraufhin wird ein Datenrahmen aufweisend die gesicherte und verschlüsselte Nachricht sowie den eigenen Schlüsselanteil von der ersten Kommunikations-Vorrichtung 101 an die zweite Kommunikations-Vorrichtung 102 übertragen.

Die mittels des Gruppenschlüssels gesicherte und mittels des weiteren Geheimnisses verschlüsselte Nachricht wird vorzugsweise zusätzlich mittels eines privaten Schlüssels der ersten Kommmunikations-Vorrichtung 101 zur Ausbildung einer digitalen Signatur signiert. Danach wird der Datenrahmen aufweisend zusätzlich die digitale Signatur von der ersten Kommunikations-Vorrichtung 101 an die zweite Kommunikations-Vorrichtung 102 übertragen.

Insbesondere wird eine Anzahl N von mittels des Gruppenschlüssels gesicherten Nachrichten, mit N ≥ 2, bidirektional und/oder unidirektional zwischen der ersten und der zweiten Kommunikations-Vorrichtung 101, 102 über die bereitgestellte verschlüsselte Punkt-zu-Punkt-Verbindung übertragen.

Vorzugsweise wird mittels der ersten Kommunikations-Vorrichtung 101 eine Schlüsseltabelle umfassend eine Anzahl G, mit G ≥ 2, von Geheimnissen erzeugt. Jedem der Geheimnisse aus der Anzahl G der Geheimnisse wird insbesondere eine bestimmte Kennzeichnung zugeordnet. Dabei verschlüsselt die erste Kommunikations-Vorrichtung 101 vorzugsweise mittels eines ersten der Geheimnisse eine durch den Gruppenschlüssel gesicherte erste Nachricht und verschlüsselt mittels eines zweiten der Geheimnisse eine durch den Gruppenschlüssel gesicherte zweite Nachricht. Die Schlüsseltabelle wird insbesondere mittels des öffentlichen Schlüssels der zweiten Kommunikations-Vorrichtung 102 durch die erste Kommunikations-Vorrichtung 101 verschlüsselt.Weiterhin signiert die erste Kommunikations-Vorrichtung 101 die verschlüsselte Schlüsseltabelle zur Ausbildung einer digitalen Signatur. Anschließend wird ein Datenrahmen aufweisend die gesicherte und durch das erste Geheimnis verschlüsselte erste Nachricht, die gesicherte und durch das zweite Geheimnis verschlüsselte zweite Nachricht, die durch den öffentlichen Schlüssel verschlüsselte Schlüsseltabelle, die digitale Signatur sowie die bestimmte Kennzeichnung für zumindest das erste und zweite Geheimnis von der ersten Kommunikations-Vorrichtung 101 an die zweite Kommunikations-Vorrichtung 102 übertragen.

Die erste Kommunikations-Vorrichtung 101 verwendet insbesondere den öffentlichen Schlüssel der zweiten Kommunikations-Vorrichtung 102 als einen festgelegten Schlüsselanteil und erzeugt einen eigenen Schlüsselanteil. Dabei wird durch die erste Kommunikations-Vorrichtung 101 ein weiteres Geheimnis umfassend eine Kombination des festgelegten Schlüsselanteils und des eigenen Schlüsselanteils berechnet und das weitere Geheimnis wird von der ersten Kommunikations-Vorrichtung 101 gespeichert. Ferner werden aus dem weiteren Geheimnis mittels einer Schlüsselableitungsfunktion spezifische Schlüssel für die Anzahl N von mittels des Gruppenschlüssels gesicherten Nachrichten zur Verschlüsselung dieser abgeleitet. Im Anschluss wird ein Datenrahmen aufweisend die Anzahl N von gesicherten und verschlüsselten Nachrichten und die spezifischen Schlüssel sowie den eigenen Schlüsselanteil von der ersten Kommunikations-Vorrichtung 101 an die zweite Kommunikations-Vorrichtung 102 übertragen. Insbesondere speichert die zweite Kommunikations-Vorrichtung 102 das weitere Geheimnis.

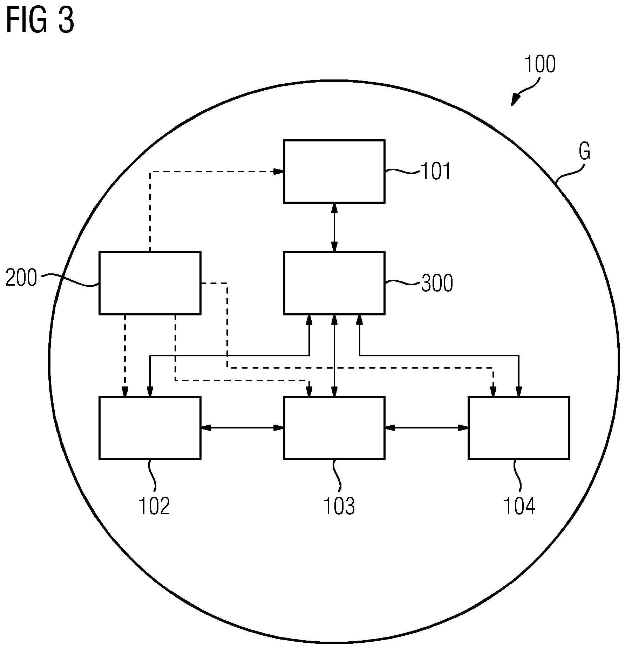

Fig. 3 zeigt ein schematisches Blockdiagramm eines Ausführungsbeispiels eines Publish-Subscribe-Systems 100 zum Übertragen von Daten mit einer Übermittlungs-Vorrichtung 300, einem Schlüsselverteilserver 200 und Kommunikations-Vorrichtungen 101 bis 104. Im Vergleich zu dem Publish-Subscribe-System 100 der Fig. 2 ist in Fig. 3 der Schlüsselverteilserver 200 außerhalb der Übermittlungs-Vorrichtung 300 ausgebildet.

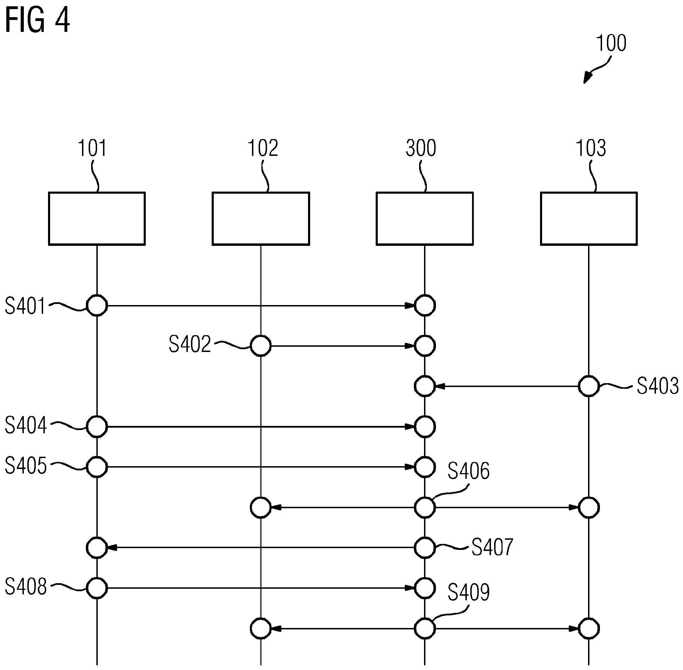

Fig. 4 zeigt einen schematischen Ablaufplan eines Ausführungsbeispiels eines Verfahrens zum Übertragen von zumindest einer Nachricht zwischen der ersten Kommunikations-Vorrichtung 101 und zumindest der zweiten Kommunikations-Vorrichtung 102 mittels einer Übermittlungs-Vorrichtung 300 innerhalb eines Publish-Subscribe-Systems 100. Weiterhin umfasst das Publish-Subscribe-System 100 eine weitere Kommunikations-Vorrichtung 103. Die erste Kommunikations-Vorrichtung 101 ist insbesondere als Server-Vorrichtung ausgebildet. Die zweite Kommunikations-Vorrichtung 102 und die weitere Kommunikations-Vorrichtung 103 sind vorzugsweise als Client-Vorrichtungen ausgebildet. Weiterhin ist die Übermittlungs-Vorrichtung 300 beispielsweise als Message Broker ausgebildet. Das Publish-Subscribe-System 100 aus Fig. 4 ist vorzugsweise Topic-basiert. Insbesondere ist die erste Kommunikations-Vorrichtung 101 als Publisher ausgebildet, während die zweite Kommunikations-Vorrichtung 102 und die weitere Kommunikations-Vorrichtung 103 als Subskribenten ausgebildet sind.

Das Ausführungsbeispiel der Fig. 4 umfasst die folgenden Verfahrensschritte S401 bis S409:
In dem Schritt S401 wird mittels der ersten Kommunikations-Vorrichtung 101 ein Topic, wie beispielsweise "Measurement Sensor_ID", an die Übermittlungs-Vorrichtung 300 veröffentlicht. Die Übermittlungs-Vorrichtung 300 weist insbesondere ein öffentliches Inhaltsverzeichnis für die Kommunikations-Vorrichtungen 102, 103 innerhalb der Gruppe G auf. Mittels diesem sind die Topics, welche die Übermittlungs-Vorrichtung 300 von der ersten Kommunikations-Vorrichtung 101 oder weiteren Server-Vorrichtungen empfängt, für die Kommunikations-Vorrichtungen 102, 103 einsehbar.

In den Schritten S402 und S403 subskribieren sich jeweils die Kommunikations-Vorrichtungen 102, 103 bei der Übermittlungs-Vorrichtung 300. Dies bedeutet, dass die Kommunikations-Vorrichtungen 102, 103 über alle Nachrichten informiert werden, welche bei der Übermittlungs-Vorrichtung 300 über das Topic "Measurement Sensor_ID" mittels der ersten Kommunikations-Vorrichtung 101 veröffentlicht werden.

In dem Schritt S404 holt sich die erste Kommunikations-Vorrichtung 101 Informationen darüber ein, welche Kommunikations-Vorrichtung 102, 103 zu dem Topic "Measurement Sensor_ID" subskribiert haben. Da sich die zweite Kommunikations-Vorrichtung 102 und die weitere Kommunikations-Vorrichtung 103 subskribiert haben, aber die zweite Kommunikations-Vorrichtung 102 als festgelegter Empfänger fungiert, frägt die erste Kommunikations-Vorrichtung 101, also die Server-Vorrichtung, das digitale Zertifikat der zweiten Kommunikations-Vorrichtung 102 ab, um den öffentlichen Schlüssel der zweiten Kommunikations-Vorrichtung 102 zum späteren Verschlüsseln der gesicherten Nachricht zu erhalten. Dies liegt insbesondere daran, dass bisher lediglich die Übermittlungs-Vorrichtung 300 und/oder ein nicht dargestellter Schlüsselverteilserver über die digitalen Zertifikate der Kommunikations-Vorrichtungen 102, 103 verfügt.

In dem Schritt S405 veröffentlicht die erste Kommunikations-Vorrichtung 101 an die Übermittlungs-Vorrichtung 300 zum Topic "Measurement Sensor_ID" einen neuen Wert, den Wert "Value". Hierbei kann es sich um einen Messwert eines Sensors der Sensor ID handeln.

In dem Schritt S406 informiert die Übermittlungs-Vorrichtung 300 nun die Subskribenten, also die zweite Kommunikations-Vorrichtung 102 sowie die weitere Kommunikations-Vorrichtung 103, dass die erste Kommunikations-Vorrichtung 101 unter dem Topic "Measurement Sensor_ID" einen neuen Wert veröffentlicht hat. Jedoch erhält die Übermittlungs-Vorrichtung 300 noch keine Informationen, wie genau der neue Wert "Value" ausgebildet ist.

In dem Schritt S407 erhält die erste Kommunikations-Vorrichtung 101, nach erfolgreicher Authentifizierung an der Übermittlungs-Vorrichtung 300, das in dem Schritt S404 angefragte digitale Zertifikat der zweiten Kommunikations-Vorrichtung 102 und somit dessen öffentlichen Schlüssel. Anschließend verschlüsselt die erste Kommunikations-Vorrichtung 101 den Anteil der Nachricht mit dem öffentlichen Schlüssel der zweiten Kommunikations-Vorrichtung 102, welchen die zweite Kommunikations-Vorrichtung 102 lesen darf, also den Wert "Value".

In dem Schritt S408 veröffentlicht die erste Kommunikations-Vorrichtung 101 die mittels des öffentlichen Schlüssels der zweiten Kommunikations-Vorrichtung 102 verschlüsselte und die mittels des Gruppenschlüssels gesicherte Nachricht an die Übermittlungs-Vorrichtung 300.

In dem Schritt S409 überträgt die Übermittlungs-Vorrichtung 300 anschließend an alle Subskribenten die verschlüsselte und gesicherte Nachricht, also an die zweite Kommunikations-Vorrichtung 102 und die weitere Kommunikations-Vorrichtung 103. Jede der Kommunikations-Vorrichtungen 102, 103, welche zu dem Topic "Measurement Sensor_ID" innerhalb der Gruppe G subskribiert ist, kann die verschlüsselte und gesicherte Nachricht empfangen. Aber lediglich die zweite Kommunikations-Vorrichtung 102 kann mittels ihres privaten Schlüssels den Anteil der verschlüsselten und gesicherten Nachricht, welcher den Wert "Value" enthält, entschlüsseln, da die verschlüsselte und gesicherten Nachricht zuvor mittels des öffentlichen Schlüssels der zweiten Kommunikations-Vorrichtung 102 verschlüsselt wurde. Die weitere Kommunikations-Vorrichtung 103 ist nicht in der Lage, die verschlüsselte und gesicherte Nachricht zu entschlüsseln. Somit wird eine Ende-zu-Ende-Verschlüsselung beim Übertragen einer verschlüsselten und gesicherten Nachricht innerhalb der Gruppe zwischen der ersten Kommunikations-Vorrichtung 101 und der zweiten Kommunikations-Vorrichtung 102 realisiert.

In dem Fall, in welchem eine Schlüsseltabelle mit symmetrischen Schlüsseln verwendet wird sowie mehrere Nachrichten zwischen der ersten Kommunikations-Vorrichtung 101 und der zweiten Kommunikations-Vorrichtung 102 übertragen werden, wird der schematische Ablaufplan aus Fig. 4 folgendermaßen durchgeführt:
Die Schritte S401 bis S407 sind mit den oben erläuterten Schritten identisch.

In dem Schritt S408 verschlüsselt die erste Kommunikations-Vorrichtung 101 die mittels des Gruppenschlüssels gesicherte Nachricht, welche den Wert "Value" beinhaltet, mit einem der symmetrischen Schlüssel aus der durch die erste Kommunikations-Vorrichtung 101 erzeugten Schlüsseltabelle. Die Schlüsseltabelle wiederrum wird mittels des öffentlichen Schlüssels der zweiten Kommunikations-Vorrichtung 102 verschlüsselt. Anschließend schickt die erste Kommunikations-Vorrichtung 101 die verschlüsselte und gesicherte Nachricht und die verschlüsselten Schlüsseltabelle mit einem eindeutigen Bezeichner des verwendeten symmetrischen Schlüssels an die Übermittlungs-Vorrichtung 300.

In dem Schritt S409 erhält die zweite Kommunikations-Vorrichtung 102 die verschlüsselte und gesicherte Nachricht und die verschlüsselten Schlüsseltabelle mit dem eindeutigen Bezeichner des verwendeten symmetrischen Schlüssels. Nun kann die zweite Kommunikations-Vorrichtung 102 mittels des privaten Schlüssels die verschlüsselte Schlüsseltabelle entschlüsseln und kann dann mittels des eindeutigen Bezeichners den symmetrischen Schlüssel aus der Tabelle verwenden, mit welchem die verschlüsselte und gesicherte Nachricht entschlüsselt werden kann. Bei der Übertragung einer erneuten Nachricht läuft das Verfahren analog ab. Für die erneute Nachricht wird ein weiterer symmetrischer Schlüssel verwendet.

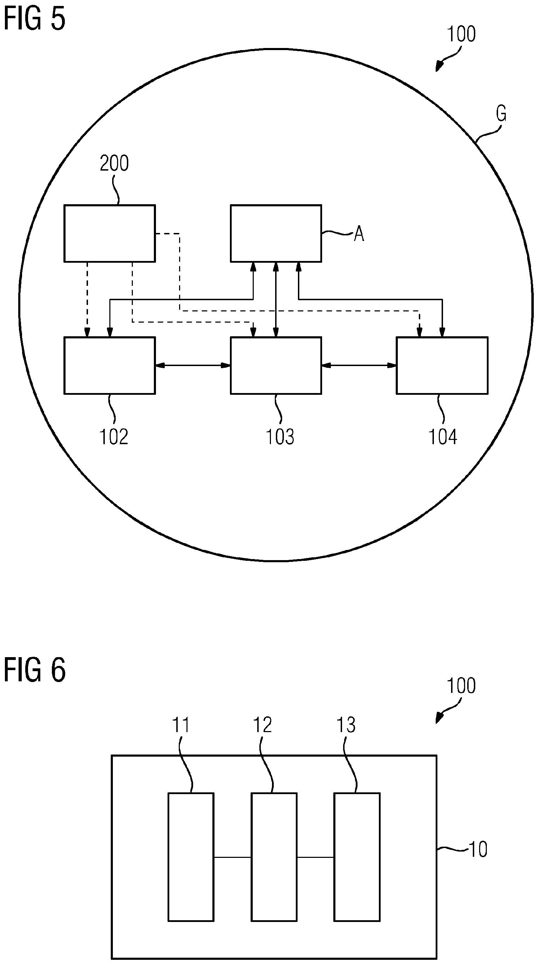

Fig. 5 zeigt ein schematisches Blockdiagramm eines Ausführungsbeispiels eines Publish-Subscribe-Systems 100 zum Übertragen von Daten mit einem Schlüsselverteilserver 200 und Kommunikations-Vorrichtungen 102, 103, 104.

Hierbei wird die Schlüsselverteilung der Gruppenschlüssel innerhalb der Gruppe G über einen Schlüsselverteilserver 200 realisiert. Dabei wird die zu übertragende gesicherte Nachricht an eine Adresse A übertragen. Die Kommunikations-Vorrichtungen 102, 103, 104, welche die gesicherte Nachricht empfangen wollen, können sich bei der Adresse A subskribieren.

Fig. 6 zeigt ein schematisches Blockdiagramm eines Ausführungsbeispiels einer Vorrichtung 10 zum Übertragen von Daten in einem Publish-Subscribe-System 100. Ein Beispiel des Publish-Subscribe-Systems 100 ist in Fig. 2 gezeigt. Die Vorrichtung 10 umfasst eine erste Bereitstellungs-Einheit 11, eine zweite Bereitstellungs-Einheit 12 und eine Übertragungs-Einheit 13.

Die erste Bereitstellungs-Einheit 11 ist dazu eingerichtet, einen Gruppenschlüssel durch den Schlüsselverteilserver 200 an eine Gruppe G ausgewählt aus den Kommunikations-Vorrichtungen 101, 102, 103, 104 zur Schaffung einer durch den Gruppenschlüssel gesicherten Gruppen-Kommunikation innerhalb der Gruppe G der ausgewählten Kommunikations-Vorrichtungen 101, 102, 103, 104 bereitzustellen.

Die zweite Bereitstellungs-Einheit 12 ist dazu eingerichtet, eine mittels eines öffentlichen Schlüssels einer asymmetrischen Verschlüsselung verschlüsselbaren Punkt-zu-Punkt-Verbindung zwischen einer ersten und einer zweiten Kommunikations-Vorrichtung 101, 102 der Gruppe G bereitzustellen.

Die Übertragungs-Einheit 13 ist dazu eingerichtet, eine mittels des öffentlichen Schlüssels für die Punkt-zu-Punkt-Verbindung verschlüsselte und mittels des Gruppenschlüssels gesicherte Nachricht zwischen der ersten und der zweiten Kommunikations-Vorrichtung 101, 102 zu übertragen.

Obwohl die vorliegende Erfindung anhand von Ausführungsbeispielen beschrieben wurde, ist sie vielfältig modifizierbar.

## Patentansprüche

1. Verfahren zum Übertragen von Daten in einem Publish-Subscribe-System (100) umfassend einen Schlüsselverteilserver (200) und eine Mehrzahl von mit dem Schlüsselverteilserver (200) koppelbaren Kommunikations-Vorrichtungen (101, 102, 103, 104) umfassend zumindest eine Server-Vorrichtung und eine Anzahl von Client-Vorrichtungen, mit:
a) Bereitstellen (S101) eines Gruppenschlüssels durch den Schlüsselverteilserver (200) an eine Gruppe (G) ausgewählt aus den Kommunikations-Vorrichtungen (101, 102, 103, 104) zur Schaffung einer durch den Gruppenschlüssel gesicherten Gruppen-Kommunikation innerhalb der Gruppe (G) der ausgewählten Kommunikations-Vorrichtungen (101, 102, 103, 104),
b) Bereitstellen (S102) einer mittels eines öffentlichen Schlüssels einer asymmetrischen Verschlüsselung verschlüsselbaren Punkt-zu-Punkt-Verbindung zwischen einer ersten und einer zweiten Kommunikations-Vorrichtung (101, 102) der Gruppe (G), und
c) Übertragen (S103) einer mittels des öffentlichen Schlüssels für die Punkt-zu-Punkt-Verbindung verschlüsselten und mittels des Gruppenschlüssels gesicherten Nachricht zwischen der ersten und der zweiten Kommunikations-Vorrichtung (101, 102).

2. Verfahren nach Anspruch 1,
**dadurch gekennzeichnet,**
**dass** eine Anzahl Z, mit Z ≥ 1, von Zertifikaten umfassend jeweils den zumindest einen öffentlichen Schlüssel mittels des Schlüsselverteilservers (200) an die erste Kommunikations-Vorrichtung (101) und/oder an die zweite Kommunikations-Vorrichtung (102) verteilt wird.

3. Verfahren nach Anspruch 1 oder 2,
**dadurch gekennzeichnet,**
**dass** die erste Kommunikations-Vorrichtung (101) die Nachricht mittels des öffentlichen Schlüssels der zweiten Kommunikations-Vorrichtung (102) verschlüsselt, die verschlüsselte Nachricht mittels des Gruppenschlüssels sichert und die gesicherte und verschlüsselte Nachricht an die zweite Kommunikations-Vorrichtung (102) überträgt.

4. Verfahren nach Anspruch 3,
**dadurch gekennzeichnet,**
**dass** eine dritte Kommunikations-Vorrichtung der Gruppe als eine Übermittlungs-Vorrichtung (300) zwischen der ersten und der zweiten Kommunikations-Vorrichtung (101, 102) angeordnet ist, wobei die mittels des Gruppenschlüssels gesicherte und mittels des öffentlichen Schlüssels der zweiten Kommunikations-Vorrichtung (102) verschlüsselte Nachricht von der ersten Kommunikations-Vorrichtung (101) über die Übermittlungs-Vorrichtung (300) an die zweite Kommunikations-Vorrichtung (102) übermittelt wird.

5. Verfahren nach Anspruch 4,
**dadurch gekennzeichnet,**
**dass** der Schlüsselverteilserver (200) als Teil der Übermittlungs-Vorrichtung (300) ausgebildet ist.

6. Verfahren nach einem der Ansprüche 3 bis 5,
**dadurch gekennzeichnet,**
**dass** die mittels des Gruppenschlüssels gesicherte und mittels des öffentlichen Schlüssels der zweiten Kommunikations-Vorrichtung (102) verschlüsselte Nachricht mittels eines privaten Schlüssels der ersten Kommunikations-Vorrichtung (101) zur Ausbildung einer digitalen Signatur signiert wird, wobei ein Datenrahmen aufweisend die gesicherte und verschlüsselte Nachricht sowie die digitale Signatur von der ersten Kommunikations-Vorrichtung (101) an die zweite Kommunikations-Vorrichtung (102) übertragen wird.

7. Verfahren nach einem der Ansprüche 1 bis 5,
**dadurch gekennzeichnet,**
**dass** die mittels des Gruppenschlüssels gesicherte Nachricht durch ein von der ersten Kommunikations-Vorrichtung (101) erzeugtes Geheimnis mittels der ersten Kommunikations-Vorrichtung (101) verschlüsselt wird und das Geheimnis mittels des öffentlichen Schlüssels der zweiten Kommunikations-Vorrichtung (102) durch die erste Kommunikations-Vorrichtung (101) verschlüsselt wird, wobei ein Datenrahmen aufweisend die gesicherte und durch das Geheimnis verschlüsselte Nachricht sowie das durch den öffentlichen Schlüssel der zweiten Kommunikations-Vorrichtung (102) verschlüsselte Geheimnis von der ersten Kommunikations-Vorrichtung (101) an die zweite Kommunikations-Vorrichtung (102) übertragen wird.

8. Verfahren nach Anspruch 7,
**dadurch gekennzeichnet,**
**dass** die mittels des Gruppenschlüssels gesicherte und mittels des Geheimnisses verschlüsselte Nachricht zusätzlich durch die erste Kommmunikations-Vorrichtung (101) mittels eines privaten Schlüssels zur Ausbildung einer digitalen Signatur signiert wird, wobei der Datenrahmen aufweisend zusätzlich die digitale Signatur von der ersten Kommunikations-Vorrichtung (101) an die zweite Kommunikations-Vorrichtung (102) übertragen wird.

9. Verfahren nach einem der Ansprüche 1 bis 5,
**dadurch gekennzeichnet,**
**dass** mittels der ersten Kommunikations-Vorrichtung (101) eine Schlüsseltabelle umfassend eine Anzahl G, mit G ≥ 1, von Geheimnissen erzeugt wird, wobei die erste Kommunikations-Vorrichtung (101) mittels eines Geheimnisses aus der Anzahl G von Geheimnissen die durch den Gruppenschlüssel gesicherte Nachricht verschlüsselt und das Geheimnis mittels des öffentlichen Schlüssels der zweiten Kommunikations-Vorrichtung (102) verschlüsselt und mittels eines privaten Schlüssels der ersten Kommunikations-Vorrichtung (101) zur Ausbildung einer digitalen Signatur das verschlüsselte Geheimnis signiert, wobei ein Datenrahmen aufweisend die gesicherte und durch das Geheimnis verschlüsselte Nachricht, die digitale Signatur sowie das durch den öffentlichen Schlüssel der zweiten Kommunikations-Vorrichtung (102) verschlüsselte Geheimnis von der ersten Kommunikations-Vorrichtung (101) an die zweite Kommunikations-Vorrichtung (102) übertragen wird.

10. Verfahren nach einem der Ansprüche 1 bis 5,
**dadurch gekennzeichnet,**
**dass** die erste Kommunikations-Vorrichtung (101) den öffentlichen Schlüssel der zweiten Kommunikations-Vorrichtung (102) als einen festgelegten Schlüsselanteil verwendet und einen eigenen Schlüsselanteil erzeugt, wobei mittels der ersten Kommunikations-Vorrichtung (101) ein weiteres Geheimnis umfassend eine Kombination des festgelegten Schlüsselanteils und des eigenen Schlüsselanteils berechnet wird und das weitere Geheimnis zur Verschlüsselung der gesicherten Nachricht verwendet wird, wobei ein Datenrahmen aufweisend die gesicherte und verschlüsselte Nachricht sowie den eigenen Schlüsselanteil von der ersten Kommunikations-Vorrichtung (101) an die zweite Kommunikations-Vorrichtung (102) übertragen wird.

11. Verfahren nach Anspruch 10,
**dadurch gekennzeichnet,**
**dass** die mittels des Gruppenschlüssels gesicherte und mittels des weiteren Geheimnisses verschlüsselte Nachricht zusätzlich mittels eines privaten Schlüssels der ersten Kommmunikations-Vorrichtung (101) zur Ausbildung einer digitalen Signatur signiert wird, wobei der Datenrahmen aufweisend zusätzlich die digitale Signatur von der ersten Kommunikations-Vorrichtung (101) an die zweite Kommunikations-Vorrichtung (102) übertragen wird.

12. Verfahren nach einem der Ansprüche 1 bis 11,
**dadurch gekennzeichnet,**
**dass** eine Anzahl N von mittels des Gruppenschlüssels gesicherten Nachrichten, mit N ≥ 2, bidirektional und/oder unidirektional zwischen der ersten und der zweiten Kommunikations-Vorrichtung (101, 102) über die bereitgestellte verschlüsselte Punkt-zu-Punkt-Verbindung übertragen wird.

13. Verfahren nach Anspruch 12,
**dadurch gekennzeichnet,**
**dass** mittels der ersten Kommunikations-Vorrichtung (101) eine Schlüsseltabelle umfassend eine Anzahl G, mit G ≥ 2, von Geheimnissen erzeugt wird, wobei jedem der Geheimnisse aus der Anzahl G der Geheimnisse eine bestimmte Kennzeichnung zugeordnet wird, wobei die erste Kommunikations-Vorrichtung (101) mittels eines ersten der Geheimnisse eine durch den Gruppenschlüssel gesicherte erste Nachricht verschlüsselt und mittels eines zweiten der Geheimnisse eine durch den Gruppenschlüssel gesicherte zweite Nachricht verschlüsselt, wobei die Schlüsseltabelle mittels des öffentlichen Schlüssels der zweiten Kommunikations-Vorrichtung (102) durch die erste Kommunikations-Vorrichtung (101) verschlüsselt wird, wobei die erste Kommunikations-Vorrichtung (101) die verschlüsselte Schlüsseltabelle zur Ausbildung einer digitalen Signatur signiert, wobei ein Datenrahmen aufweisend die gesicherte und durch das erste Geheimnis verschlüsselte erste Nachricht, die gesicherte und durch das zweite Geheimnis verschlüsselte zweite Nachricht, die durch den öffentlichen Schlüssel verschlüsselte Schlüsseltabelle, die digitale Signatur sowie die bestimmte Kennzeichnung für zumindest das erste und zweite Geheimnis von der ersten Kommunikations-Vorrichtung (101) an die zweite Kommunikations-Vorrichtung (102) übertragen wird.

14. Verfahren nach Anspruch 12,
**dadurch gekennzeichnet,**
**dass** die erste Kommunikations-Vorrichtung (101) den öffentlichen Schlüssel der zweiten Kommunikations-Vorrichtung (102) als einen festgelegten Schlüsselanteil verwendet und einen eigenen Schlüsselanteil erzeugt, wobei durch die erste Kommunikations-Vorrichtung (101) ein weiteres Geheimnis umfassend eine Kombination des festgelegten Schlüsselanteils und des eigenen Schlüsselanteils berechnet wird und das weitere Geheimnis von der ersten Kommunikations-Vorrichtung (101) gespeichert wird, wobei aus dem weiteren Geheimnis mittels einer Schlüsselableitungsfunktion spezifische Schlüssel für die Anzahl N von mittels des Gruppenschlüssels gesicherten Nachrichten zur Verschlüsselung dieser abgeleiten werden, wobei ein Datenrahmen aufweisend die Anzahl N von gesicherten und verschlüsselten Nachrichten und die spezifischen Schlüssel sowie den eigenen Schlüsselanteil von der ersten Kommunikations-Vorrichtung (101) an die zweite Kommunikations-Vorrichtung (102) übertragen wird, wobei die zweite Kommunikations-Vorrichtung (102) das weitere Geheimnis speichert.

15. Computerprogrammprodukt, welches auf einer programmgesteuerten Einrichtung die Durchführung des Verfahrens nach einem der Ansprüche 1 bis 14 veranlasst.

16. Vorrichtung (10) zum Übertragen von Daten in einem Publish-Subscribe-System (100) umfassend einen Schlüsselverteilserver (200) und eine Mehrzahl von mit dem Schlüsselverteilserver (200) koppelbaren Kommunikations-Vorrichtungen (101, 102, 103, 104) umfassend zumindest eine Server-Vorrichtung und eine Anzahl von Client-Vorrichtungen, mit:
- einer ersten Bereitstellungs-Einheit (11), welche dazu eingerichtet ist, einen Gruppenschlüssels durch den Schlüsselverteilserver (200) an eine Gruppe (G) ausgewählt aus den Kommunikations-Vorrichtungen (101, 102, 103, 104) zur Schaffung einer durch den Gruppenschlüssel gesicherten Gruppen-Kommunikation innerhalb der Gruppe (G) der ausgewählten Kommunikations-Vorrichtungen (101, 102, 103, 104) bereitzustellen,
- einer zweiten Bereitstellungs-Einheit (12), welche dazu eingerichtet ist, eine mittels eines öffentlichen Schlüssels einer asymmetrischen Verschlüsselung verschlüsselbaren Punkt-zu-Punkt-Verbindung zwischen einer ersten und einer zweiten Kommunikations-Vorrichtung (101, 102) der Gruppe (G) bereitzustellen, und
- einer Übertragungs-Einheit (13), welche dazu eingerichtet ist, eine mittels des öffentlichen Schlüssels für die Punkt-zu-Punkt-Verbindung verschlüsselte und mittels des Gruppenschlüssels gesicherte Nachricht zwischen der ersten und der zweiten Kommunikations-Vorrichtung (101, 102) zu übertragen.

17. Publish-Subscribe-System (100) mit zumindest einem Schlüsselverteilserver (200), einer Mehrzahl von mit dem Schlüsselverteilserver (200) koppelbaren Kommunikations-Vorrichtungen (101, 102, 103, 104) und zumindest einer Vorrichtung (10) zum Übertragen von Daten in dem Publish-Subscribe-System (100) nach Anspruch 16.
